# EUROPÄISCHE PATENTSCHRIFT

(11) **EP 2 443 447 B1**
(45) Veröffentlichungstag und Bekanntmachung des Hinweises auf die Patenterteilung: **12.08.2015**
(21) Anmeldenummer: 10725464.1
(22) Anmeldetag: 16.06.2010
(51) Int. Cl.: G01N 31/22, G01N 21/78

(54) **VERWENDUNG EINES SAUERSTOFFINDIKATORS FÜR PARENTERALE UND ENTERALE APPLIKATIONSFORMEN.**
USE OF AN OXYGEN INDICATOR FOR PARENTERAL AND ENTERAL MODES OF ADMINISTRATION
UTILISATION D'UN INDICATEUR D'ACIDE POUR DES MODES D'ADMINISTRATION PARENTÉRALE ET ENTÉRALE.

(30) Priorität: 19.06.2009 EP 09163218
(43) Veröffentlichungstag der Anmeldung: 25.04.2012
(73) Patentinhaber: B. Braun Melsungen AG, 34212 Melsungen (DE)
(72) Erfinder: Krüger, Volker, 34329 Nieste (DE); Beck, Rolf, 34212 Melsungen (DE)
(74) Vertreter: Von Kreisler Selting Werner - Partnerschaft von Patentanwälten und Rechtsanwälten mbB
(86) Internationale Anmeldenummer: PCT/EP2010/058441
(87) Internationale Veröffentlichungsnummer: WO 2010/146076

(56) Entgegenhaltungen:
- WO-A1-03/021252
- WO-A1-2006/135344
- WO-A1-2007/018301
- DE-A1- 2 812 870
- JP-A- 2006 090 773
- US-A- 4 526 752

## Beschreibung

Die vorliegende Erfindung betrifft die Verwendung eines Sauerstoffindikators, bei welchem die Anwesenheit oder Abwesenheit von Sauerstoff durch einen Farbwechsel sichtbar gemacht wird, insbesondere zur Überwachung von parenteralen und enteralen Applikationsformen.

Im medizinischen Bereich sind viele Umverpackungen aus Glas durch Umverpackungen aus einem Kunststoff ersetzt worden. Kunststoffumverpackungen sind leichter und häufig auch billiger. Im Bereich der parenteralen und enteralen Therapie ist es häufig notwendig, dass die Inhaltsstoffe von der Umgebungsluft, vor allem von Sauerstoff, getrennt sind. Kunststoffe sind mehr oder weniger luft- und damit sauerstoffdurchlässig. Durch den Kontakt mit Sauerstoff können medizinische Produkte zerfallen und ihre Wirksamkeit verlieren, oder es können unter Umständen unerwünschte Abbauprodukte auftreten.

Es besteht demnach die Notwendigkeit zu kontrollieren, dass kein Sauerstoff zu dem luftempfindlichen Produkt vorgedrungen ist. Dieser Nachweis sollte schnell und einfach, am besten ohne Hilfsmittel, durchzuführen sein.

Im Stand der Technik sind Indikatoren bekannt, welche beim Kontakt mit Sauerstoff ihre Farbe ändern. Häufig handelt es sich um Metalle oder Metallverbindungen, insbesondere Eisen(II)-Verbindungen. So wird in EP 0 922 219 B1 und US 6,093,572 A eine farbige Zusammensetzung aus einer Pyrogallol-Verbindung, einem Eisen-II-Salz und einer organischen Säure beschrieben. Die Pyrogallol-Verbindung ist natürliches oder synthetisch oder halbsynthetisch hergestelltes Tannin. In der Anwesenheit von Sauerstoff färbt sich die ursprünglich gelbe Zusammensetzung schwarz. Der Farbumschlag beruht auf einer Oxidation von Eisen-II- zu Eisen-III, welches dann mit dem aromatischen System von Tannin reagiert.

Ebenfalls eine Farbzusammensetzung bestehend aus einer Eisen(II)- und einer Pyragollol-Verbindung beschreiben US 6,627,443 B1 und US 6,399,387 B1. Der Farbumschlag des hier beschriebenen Sauerstoffindikators kann durch eine Reduktion der Eisenionen rückgängig gemacht werden.

Die WO 2007/059900 A1 betrifft einen Sauerstoff-Scavenger/-Indikator, der mindestens ein Sauerstoff-Sorbens aus einem Metall oder einer Metallverbindung enthält, das/die durch Sauerstoff in eine höhere Oxidationsstufe überführbar ist. Darüber hinaus sind weiterhin ein Komplexbildner oder Redox-Indikator für das Sorbens sowie ein Elektrolyt enthalten. Die Indikatorwirkung wird durch eine Änderung der physikalischen Eigenschaften des Sauerstoff-Sorbens bewirkt, die durch Komplexbildung und/oder Wechselwirkung mit dem Redox-Indikator ausgelöst wird.

JP 56132560 beschreibt eine Sauerstoff-nachweisende Zusammensetzung. Diese Zusammensetzung ist einfach handhabbar und hat einen deutlichen Farbunterschied als Reaktion auf die Anwesenheit oder Abwesenheit von Sauerstoff. Ein solcher Stoff enthält eine Verbindung mit einem Oxazin-Kern, eine Eisenverbindung, Magnesium-Silikate und Wasser oder Alkohol. In der Anwesenheit von Sauerstoff färbt sich die Mischung rot-violett, in Abwesenheit von Sauerstoff weiß. Der Wechsel im Farbton ist reversibel.

Neben Metallionen finden auch Redox-Farbstoffe Verwendung als Sauerstoffindikatoren. Es sind mehrere Farbstoffe bekannt, die in ihrer reduzierten Form, der Leuko- oder Dihydroform, eine andere Farbe besitzen als in ihrer oxidierten Form. Man unterscheidet zwischen zweifarbigen Indikatoren wie Ferroin (Farbumschlag blau - rot) und einfarbigen Indikatoren wie Neutralrot (farblos - rot). Der Farbumschlag ist in allen Fällen reversibel.

So befasst sich US 2007/0031976 A1 mit einem Sauerstoffindikator, der die Anwesenheit von Sauerstoff in einer Verpackung anzeigt, welche eine medizinische Zusammensetzung enthält. Der Indikator besteht aus einer Zusammensetzung, wobei die einzelnen Bestandteile als sicher in der Verwendung mit medizinischen Produkten eingestuft wurden. Als Redox-Farbstoff fungiert Indigo-Carmin, welches bei einem pH-Wert von 9,0 bis 9,75 mit Cellulose, einem Reduktionsmittel und Wasser vermischt wird.

JP 56065072 beschreibt eine Sauerstoff-nachweisende Verbindung. Als Redox-Farbstoff dient eine Verbindung mit einem Oxazin-Grundgerüst. Außerdem beinhaltet die Verbindung Glucose, mindestens eine Verbindung ausgewählt aus einem Hydroxid, einem Silikat eines Akali- oder Erdalkalimetalls und Aluminiumhydroxid. Der Farbumschlag zwischen oxidierter und reduzierter Form ist reversibel.

EP 0524021 B1 beschäftigt sich mit einem Sauerstoffindikator, der mindestens eine organische Verbindung mit drei oder mehr Kohlenstoffatomen sowie mindestens einer primären Aminogruppe und mindestens einer Hydroxygruppe und mindestens ein Farbstoff ausgewählt aus der Gruppe Thiazinfarbstoff, Indigofarbstoffe und Mischungen hiervon enthält. Des Weiteren ist zusätzlich mindestens eine organische oder anorganische Säure enthalten. Diese Patentschrift beschäftigt sich mit einem Sauerstoffindikator, der die Anwesenheit oder Abwesenheit von Sauerstoff in einer Gasphase anzeigt, welche Lebensmittel, elektronische Teile, elektrische Produkte, welche elektronische Teile, metallische Teile oder Produkte mit metallischen Anteilen schützen soll.

Der Sauerstoffindikator aus EP 1312918 A2 enthält Schichtsilikate, kationische, grenzflächenaktive Stoffe, einen organischen Farbstoff, ein Reduktionsmittel und gegebenenfalls eine basische Verbindung. Die Zusammensetzung ermöglicht durch einen reversiblen Farbumschlag die Kontrolle über An- oder Abwesenheit von Sauerstoff oder die Konzentration an Sauerstoff.

Die US 6,676,901 B1 betrifft einen Sauerstoffindikator welcher ein sauerstoffanzeigendes Mittel enthält, beinhaltend ein Substrat und eine sauerstoffanzeigende Zusammensetzung, welche auf der Oberfläche des Substrats fixiert ist. Diese Schrift beinhaltetet außerdem ein Päckchen, welches Sauerstoff bindet und eine sauerstoffanzeigende Funktion hat, an welches der Sauerstoffindikator geklebt werden kann. Die Schrift betrifft weiterhin ein Verfahren und eine Vorrichtung um den Sauerstoffindikator an einem Objekt zu befestigen.

WO 2006/135344 A1 offenbart eine Sauerstoff-sensitive Zusammensetzung, die einen Sauerstoffindikator, Glycerin, Ethanol und Wasser enthält. Es wird eine Vielzahl von Indikatorfarbstoffen offenbart, wie beispielsweise Toluidinblau, Methylenblau, Trypanblau, Kristallviolett, Azurblau etc.. DE2812870 A1 lehrt einen Sauerstoffindikator enthaltend ein alkalisches Material, einen Indikatorfarbstoff wie zum Beispiel Methylenblau und ein reduzierendes Reagenz wie Glucose.

WO 03/021252 A1 offenbart die Verwendung einer Zusammensetzung zur Bestimmung von Sauerstoff, wobei die Zusammensetzung die folgenden Komponenten enthält:
I) Resorufin,
II) Triethanolamin,
III) Titandioxid und
IV) Hydroxyethyl Cellulose.

Aufgabe der vorliegenden Erfindung ist demnach die Bereitstellung eines licht- und hitzeresistenten Sauerstoffindikators, bei dem ein Farbumschlag mit dem Auge erkennbar ist. Der Farbumschlag sollte zügig vonstattengehen, jedoch nicht innerhalb weniger Sekunden. Findet der Indikator Anwendung in einer Packung, so sollte auch nach dem Öffnen der Packung noch für einige Minuten zu erkennen sein, ob der Indikator schon vor dem Öffnen mit Sauerstoff in Kontakt gekommen war oder nicht. Der Indikator soll weiterhin so gestaltet sein, dass das sauerstoffempfindliche Produkt sichtbar bleibt. Insbesondere ist ein Redoxfarbstoff als Sauerstoffindikator angestrebt, welcher im reduzierten Zustand farblos ist, in der oxidierten Form eine intensive Farbe aufweist, so dass eine Anwesenheit von Sauerstoff mit dem bloßen Auge deutlich erkennbar ist.

Überraschenderweise löst die vorgenannte Aufgabe die Verwendung einer Mischung aus Resorufin als organischer Redoxfarbstoff, Glycerol und Wasser, eingearbeitet in Hydroxyethylstärke. Durch die Verwendung des Glycerols wird Wasser in dem Sauerstoffindikator gebunden. In einer bevorzugten Ausführungsform enthält der so definierte Sauerstoffindikator außerdem einen organischen oder anorganischen Puffer, insbesondere einen Phosphat- und/oder Citratpuffer.

Erfindungsgemäß wird bevorzugt mit einer ein Molaren Pufferlösung gearbeitet, so dass sich eine Konzentration von 0,001 bis 2 Mol, insbesondere 0,01 bis 1 Mol bezogen auf den Sauerstoffindikator ergibt.

Enthält der Sauerstoffindikator Resorufin als organischen Redoxfarbstoff, so wird der pH-Wert auf einem Bereich von 6 bis 10, bevorzugt 7 bis 9, besonders bevorzugt 7,5 bis 8,5 eingestellt.

Erfindungsgemäß wird der Sauerstoffindikator in Hydroxyethylstärke (HES) eingearbeitet. Als weitere mögliche Hilfsstoffe finden Methylcellulose, mikrokristalline Cellulose, Lysin, Lysin-Hydrochlorid, Magnesiumstearat und/oder Silicone, insbesondere Gelatine Verwendung. Gelatine und/oder HES wirken leicht reduzierend, so dass der Redoxfarbstoff in seiner oxidierten Form eingesetzt werden kann und erst vor der Verwendung als Sauerstoffindikator reduziert werden kann.

HES können mit unterschiedlichen Molekülgrößen verwendet werden. Ein Sauerstoffindikator kann mit HES 130 aber auch mit HES 200 und/oder HES 450 hergestellt werden. Die Zahl beschreibt die molare Masse der entsprechenden Hydroxyethylstärke in Kilo-Dalton.

Des Weiteren kann ein Sauerstoffindikator auf ein Trägermaterial, insbesondere Ionentauscher, Papier oder Folie, aufgebracht werden. In einer bevorzugten Ausführungsform wird ein Anionen- oder Kationentauscher auf Polymerbasis oder aus einem polymeren Kohlenhydratderivat verwendet. Ein solcher Ionentauscher wird zuerst mit einem Puffer gespült, anschließend wird der Sauerstoffindikator aufgetragen. Die Verwendung eines Ionentauschers als Trägermaterial ermöglicht die Einstellung des pH-Wertes über den Ionentauscher selbst, wodurch eine weitere Pufferzugabe nicht mehr notwendig ist.

Ein Sauerstoffindikator kann in Form einer Tablette, Kapsel oder als Gel vorliegen. Diese können wiederum in eine separate Umverpackung, bevorzugt einen Beutel oder Blister, eingebracht werden. Durch die Dicke des Materials aus dem die Umverpackung besteht, kann die Sauerstoffdurchlässigkeit kontrolliert und entsprechend der Verwendung angepasst werden.

Grundsätzlich gibt es drei unterschiedliche Varianten den Farbstoff einzuarbeiten:
1. Der Farbstoff wird zur Leuko- oder Dihydroverbindung reduziert und unter Inertgas weiterverarbeitet.
2. Der Indikator wird mit Schutzgruppen in der reduzierten Form stabilisiert und eingearbeitet. Die Aktivierung geschieht im Endprodukt vor, während oder nach einer Wärmebehandlung des Endproduktes durch Abspaltung der Schutzgruppe.
3. Die Indikatorsubstanz wird in der oxidierten Form eingearbeitet. Die Aktivierung geschieht im Endprodukt vor, während oder nach einer Wärmebehandlung des Endproduktes durch Reduktion.

Wird der Redoxfarbstoff in der reduzierten Form eingebracht, so müssen alle weiteren Verfahrensschritte unter Inertgas in einer sauerstofffreien Atmosphäre geschehen. Zur Reduktion des Farbstoffes eignen sich Reduktionsmittel mit einem höheren Reduktionspotenzial als der entsprechende Farbstoff selbst, insbesondere Glucose, Natriumdisulfit, Zink, Mangan(II)-Chlorid, N-Acetylcystein und/oder Ascorbinsäure. Die Reduktionsmittel werden vor der Verwendung des reduzierten Farbstoffs als Sauerstoffindikator abgetrennt.

Zur Stabilisierung der reduzierten Form des Redox-Farbstoffs können Schutzgruppen eingebracht werden. Diese spalten sich bei einer Temperaturbehandlung ab. Bevorzugt handelt es sich hierbei um eine Benzylgruppe.

Wird der Redoxfarbstoff in seiner oxidierten Form eingebracht, so kann die weitere Bearbeitung unter Normalbedingungen erfolgen. Eine Reduktion des Farbstoffes erfolgt dann während einer Temperaturbehandlung, beispielsweise einer Sterilisation.

Durch Aufbringung auf Trägermaterialien oder Einarbeitung in Hilfsstoffe kann der Farbstoff immobilisiert werden. Möglich ist die Aufbringung des Sauerstoffindikators als Schriftzug auf Folie oder Papier. Dieser Schriftzug ist in Abwesenheit von Sauerstoff nicht oder nur schwer sichtbar. Sollte jedoch der Indikator mit Sauerstoff in Kontakt kommen, wird der Schriftzug sichtbar. Eine Verwechslung von Farben wird somit vermieden.

Der fertige Sauerstoffindikator kann aus kleinen materialbefüllten Beuteln, zum Beispiel in Kissenform, bestehen. Eine weitere Variante ist die Befüllung eines Blisters oder einer gestanzten oder tiefgezogenen Folie, in welcher der Sauerstoffindikator bei Oxidation seine Farbe ausbilden kann. Die Sauerstoffdurchlässigkeit der Umverpackung kann den Bedürfnissen angepasst werden. Durch die Dicke einer verwendeten Folie kann die Sauerstoffpermeabilität beeinflusst werden.

In einer weiteren Ausführungsform findet der Sauerstoffindikator in Form von Tabletten oder Kapseln Anwendung. Die Hülle der Kapsel ist bevorzugt durchsichtig. Bevorzugt handelt es sich um eine Gel-gefüllte Kapsel, in der der Sauerstoffindikator in Gelatine oder HES eingebracht wurde.

Ein Sauerstoffindikator kann zur Überwachung von parenteralen und enteralen Applikationsformen verwendet werden, insbesondere im räumlichen Bereich zwischen einem Beutel zur parenteralen und enteralen Ernährung und einem Umbeutel.

Bei der Verwendung von Resorufin als Redoxfarbstoff findet in einem Sauerstoffindikator ein Farbumschlag von farblos hin zu rot-violett statt. Durch Veränderung der Konzentration der Hilfsstoffe, insbesondere Gelatine und/oder Hydroxyethylstärken, kann der Farbton variieren. Im Falle von Methylenblau und/oder Toluidinblau erfolgt durch Oxidation beispielsweise eine Farbveränderung nach grün oder IiIa bei hohen Gelatinekonzentrationen. In der reduzierten Form ist ein solcher Sauerstoffindikator leicht gelb. Beide Formen sind in ihrer Farbe mit dem bloßen Auge sehr gut voneinander zu unterscheiden.

Der Sauerstoffindikator kann in dem räumlichen Bereich zwischen einem Beutel zur parenteralen und enteralen Ernährung und einem Umbeutel eingesetzt werden. Zusätzlich kann in diesen Bereich noch ein Sauerstoffabsorber eingesetzt werden. Dieser bindet eventuell vorhandenen freien Sauerstoff und verlängert damit sowohl die Haltbarkeit der parenteralen und interalen Applikationsform als auch die Wirksamkeit des Sauerstoffindikators.

In den folgenden Beispielen soll der Indikator erläutert, jedoch nicht ausschließend beschrieben werden.

### Ausführungsbeispiele:

Von den Redoxfarbstoffen wurden folgende Lösungen hergestellt:
Resorufin wurde in einer Konzentration von 1% in destilliertem Wasser gelöst. Die Lösung wurde bei Bedarf mit destilliertem Wasser verdünnt. Die entsprechenden Konzentrationen sind in den jeweiligen Beispielen angegeben.
Methylenblau wurde in einer Konzentration 1% in destilliertem Wasser gelöst. (Vergleich) Toluidinblau wurde in einer Konzentration 1% in destilliertem Wasser gelöst. (Vergleich)

Diese wurden in den folgenden Beispielen eingesetzt.

### Beispiel 1:

### Ionenaustauscher Amberlite^{®} CG-50 I

Jeweils drei Spatelspitzen Ionenaustauscher CG-50 I wurden mit WFI (water for injection) gewaschen und überstehende Lösung abdekantiert. Anschließend wurde der Ionenaustauscher jeweils mit 1 %iger Methylenblaulösung, 1 %iger Toluidinblaulösung oder 0,001 %iger Resorufinlösung versetzt und verrührt. Das Gemisch wurde einige Zeit stehen gelassen und hin und wieder umgerührt. Danach wurde jedes Gemisch mit Hilfe eines Büchnertrichters mit eingelegtem Filterpapier filtriert. Der noch feuchte Ionenaustauscher wurde anschließend in Probegläschen umgefüllt und verschlossen.

Von jedem Ionenaustauscherindikatorgemisch wurde eine Spatelspitze in einen Umbeutel gefüllt und mit einem Absorberbeutel eingeschweißt. Nach einem Zeitraum von 14 Tagen waren alle Sauerstoffindikatoren nach wie vor entfärbt.

### Beispiel 2:

10 g eines Dowex^{®} 1-X8 Ionenaustauschers wurden dreimal mit WFI aufgeschwemmt und anschließend in einer Filternutsche abgenutscht. 50 g einer 0,001 %igen Resorufinlösung mit einem pH-Wert von 8 wurden über den Ionenaustauscher geschichtet. Die Mischung wurde mehrmals verrührt und anschließend abgenutscht. Der Ionentauscher wurde dann noch dreimal mit WFI aufgeschwemmt und abgenutscht.

Der mit Resorufin geladene Ionenaustauscher wurde in eine Probeflasche umgefüllt.

### Beispiel 3:

In einem weiteren Ansatz wurden 10 g Gelatine mit 40 g WFI und 5 ml einer ein Molaren Kaliumphosphat Pufferlösung (pH 8,0) verrührt und 20 Minuten zum Quellen stehen gelassen. Anschließend wurden 60 g Glycerol zugegeben, vermischt und im Wasserbad auf 65° Celsius erhitzt. 2 g des mit Resorufin geladenen Ionentauschers Dowex^{®} 1-X8 wurden zugegeben und verrührt. Die Lösung wurde in eine 250 ml Infusionsflasche umgefüllt und für 15 Minuten bei einer 121° Celsius sterilisiert.

Auch nach der Sterilisation blieb der Ionentauscher mit der Gelatine gemischt.

### Beispiel 4:

Ein DEAE Sephadex^{®} Ionenaustauscher wurde mit WFI aufgequollen und mit 0,001 %iger Resorufinlösung versetzt. Die Mischung wurde über eine Fritte abgenutscht und das Gemisch mit einem Phosphatpuffer bei einem pH-Wert von 8 gewaschen. Das Gemisch wurde noch mehrmals mit Resorufinlösung gespült, um die Konzentration von Resorufin zu erhöhen. Der stark rosa gefärbte Rückstand wurde in Probegläschen umgefüllt und verschlossen. Von dem Gemisch wurden 6 Proben in kleine Beutel aus Excel-Folie eingeschweißt und jeder Beutel in eine 250 ml Infusionsglasflasche zusammen mit einem Mitsubishi-Absorberbeutel getan. Die Flaschen wurden bei 121° Celsius für 15 Minuten sterilisiert. Nach der Sterilisation blieb die Farbe erhalten. Durch den Sauerstoffabsorber entfärbt sich das Gemisch.

Nach einem Zeitraum von drei Monaten wurden drei Infusionsflaschen geöffnet, in denen je ein Excel-Beutel mit der DEAE Sephadex^{®}-Resorufinmischung enthalten war. Der Excel-Beutel wurde leicht geöffnet, das Gemisch färbte sich sofort violett.

Es wurde außerdem eine weitere Infusionsflasche geöffnet, in der sich über den gleichen Zeitraum eine Kugel aus DEAE Sephadex^{®} Ionenaustauscher beladen mit Resorufin und Puffer bei einem pH von 8 befand. Zusätzlich enthielt das Gemisch noch ca. 40 % Glycerol. Die Kugel färbte sich nach dem Kontakt mit Sauerstoff innerhalb von 5 Minuten stark rosa.

### Beispiel 5:

**Tabelle 1**

| | Gelatine | WFI | Puffer 1M | Glycerol | Indikator |
|---|---|---|---|---|---|
| Ansatz 6.1 | 20 g | 100 g | 20 ml (pH 8) | 60 g | 0.24 g 1 %ige Resorufinlsg. |
| Ansatz | 20 g | 100 g | 20 ml (pH | 60 g | 0.595 g 1 %ige |
| 6.2 | | | 4) | | MB-Lsg. |
| Ansatz 6.3 | 20 g | 100 g | 20 ml (pH 4) | 60 g | 0.51 g 1 %ige TB-Lsg. |

| | | | | | |
|---|---|---|---|---|---|
| MB- Lsg.= Methylenblaulösung (Vergleich) TB- Lsg. = Toluidinblaulösung (Vergleich) | | | | | |

Gelatine, WFI und Pufferlösung wurden in einer Fantaschale 20 min zum Quellen stehen gelassen. Danach wurde Glycerol zugegeben und die Mischung im Wasserbad auf ca. 65° Celsius erhitzt. Nach dem Lösen der Gelatine wurde der Indikator tröpfchenweise zugegeben, bis die gewünschte Intensität der Färbung erreicht war. Die Behälter mit Indikator wurden vorher und nachher gewogen, die Differenz war der Verbrauch an Indikatorlösung.

Jeweils 1 ml eines jeden Ansatzes wurden in 6 Excelbeutel eingefüllt und verschweißt. Jeder Beutel wurde in eine 100 ml Infusionsflasche mit einem Sauerstoffabsorber eingebracht, mit Argon begast und verschlossen. Jeweils 3 Flaschen eines Ansatzes wurden für 15 min bei 121 ° Celsius sterilisiert, die anderen 3 Flaschen wurden bei Raumtemperatur gelagert.

### Beispiel 6:

**Tabelle 2**

| | HES 200 | WFI | Puffer 1M | Glycerol | Indikator |
|---|---|---|---|---|---|
| Ansatz 7.1 | 75 g | 15 g | 15 ml (pH 8) | 45 g | 0.128 g 1 %ige Resorufinlsg. |
| Ansatz 7.2 | 75 g | 15 g | 15 ml (pH 4) | 45 g | 0.38 g 1 %ige MB-Lsg. |
| Ansatz 7.3 | 75 g | 15 g | 15 ml (pH 4) | 45 g | 0.34 1 %ige TB-Lsg. |

| | | | | | |
|---|---|---|---|---|---|
| MB- Lsg.= Methylenblaulösung (Vergleich) TB- Lsg. = Toluidinblaulösung (Vergleich) | | | | | |

HES 200 wurde mit Pufferlösung, WFI und Glycerol gemischt. Anschließend wurde jeder Ansatz im Wasserbad auf ca. 80° Celsius erhitzt und verrührt. Nachdem eine homogene Masse entstanden war, wurde der Indikator tropfenweise zugegeben, bis die gewünschte Färbung erreicht war. Die Behälter mit Indikator wurden vorher und nachher gewogen, die Differenz war der Verbrauch am jeweiligen Indikator. Von jedem Ansatz wurde ein Spatellöffel in 6 Excelbeutel eingefüllt und verschweißt. Jeder Beutel wurde in eine 100 ml Infusionsflasche mit einem Sauerstoffabsorber eingebracht, mit Argon begast und verschlossen. Jeweils 3 Flaschen eines Ansatzes wurden für 15 min bei 121° Celsius sterilisiert, die anderen 3 Flaschen wurden bei Raumtemperatur gelagert.

### Beispiel 7:

**Tabelle 3**

| | |
|---|---|
| HES 200 | 350 g |
| Lysin HCl | 3 g |
| WFI | 70 g |
| Glycerol | 210 g |

Die Stärke wurde mit Lysin-Hydrochlorid, WFI und Glycerol vermischt und im Wasserbad auf ca. 80° Celsius erhitzt und verrührt, bis eine homogene Masse entstand. Die Temperatur wurde für ca. 2 Stunden konstant gehalten, danach auf Raumtemperatur abgekühlt und über Nacht stehen gelassen.

Das Gemisch wurde kalt in drei Bechergläser aufgeteilt und Indikatorlösung zugegeben.

**Tabelle 4**

| | HES-Lysin Gemisch | Indikator |
|---|---|---|
| Ansatz 8.1 | 113,543 g | 64 mg 1 %ige Resorufinlsg. |
| Ansatz 8.2 | 110,462 g | 169 mg 1 %ige MB-Lsg. |
| Ansatz 8.3 | 109,817 g | 151 mg 1 %ige TB-Lsg. |

| | | |
|---|---|---|
| MB- Lsg.= Methylenblaulösung (Vergleich) TB- Lsg. = Toluidinblaulösung (Vergleich) | | |

Alle 3 Bechergläser wurden im Wasserbad auf ca. 80° Celsius erhitzt und die Gemische verflüssigt. Danach wurde der Indikator bis zur gewünschten Färbung zugegeben.

Von jedem Ansatz wurde je ein Spatellöffel in 6 Excelbeutel eingefüllt und verschweißt. Jeder Beutel wurde in eine 100 ml Infusionsflasche mit einem Sauerstoffabsorber eingebracht, mit Argon begast und verschlossen. Jeweils 3 Flaschen eines Ansatzes wurden für 15 min bei 121° Celsius erhitzt (sterilisiert), die anderen 3 Flaschen wurden bei Raumtemperatur gelagert.

### Beispiel 8:

Aus jedem Ansatz der Beispiele 5, 6 und 7 wurde von jedem Indikatoransatz ein Beutel der wärmebehandelten Variante aus der Flasche genommen. Die Beutel der Gelatineansätze färbten sich nach ca. 30 min. Der Beutel der HES- Ansätze färbten sich erst nach mehreren Stunden.

### Beispiel 9:

Um eine mögliche Wiederverwendung des erfindungsgemäßen Sauerstoffindikators zu testen, wurden von den Ansätzen aus den Beispielen 5, 6 und 7 von jedem Indikatoransatz eine bereits wärmebehandelte und eine noch nicht wärmebehandelte Flasche erneut für 15 Minuten bei 121° Celsius erhitzt (sterilisiert).

Auch die am Vortag wärmebehandelten Flaschen wurden geöffnet, die Beutel entnommen, auf eine weiße Oberfläche gelegt und von allen Proben in festgelegten Abständen die Veränderungen notiert.

Die Ergebnisse können der folgenden Tabelle 5 entnommen werden.

**Tabelle 5**

| | Zeit (Stunden) | | | | | |
|---|---|---|---|---|---|---|
| Ansatz | sofort | 0,5 | 1 | 2 | 7 | 24 |
| Ansatz 5.1; 1 Wärmebehandlung | hellgelb | violett | durchgängig violett | violett noch kräftiger | keine weitere Änderung | keine weitere Änderung |
| Ansatz | hellgelb | Außen | Durchgängig | violett noch | keine weitere | keine weitere |
| 5.1; 2 Wärmebehandlungen | | violett, innen gelb | violett | kräftiger | Änderung | Änderung |
| Ansatz 5.2; 1 Wärmebehandlung | hellgelbhellgrün | Innen gelb, außen hellgrün | Durchgängig blau | keine weitere Änderung | keine weitere Änderung | keine weitere Änderung |
| Ansatz 5.2; 2 Wärmebehandlungen | hellgelbhellgrün | Innen gelb, außen hellgrün | Durchgängig blau | keine weitere Änderung | keine weitere Änderung | keine weitere Änderung |
| Ansatz 5.3; 1 Wärmebehandlung | hellgelb | Innen gelb, außen hellgrün | Durchgängig blau | Blau dunkler als bei Ansatz 5.2 | keine weitere Änderung | keine weitere Änderung |
| Ansatz 5.3; 2 Wärmebehandlungen | hellgelb | Innen gelb, außen hellgrün | Durchgängig blau | blau dunkler als bei Ansatz 5.2 | keine weitere Änderung | keine weitere Änderung |
| Ansatz 6.1; 1 Wärmebehandlung | gelb | Außen orangerot | Insgesamt etwas dunkler | Außen mehr rot | Innen gelb, außen rot | Innen orange, außen rot kräftiger |
| Ansatz 6.1; 2 Wärmebehandlungen | gelborange | Außen orangerot | Insgesamt etwas dunkler | Außen mehr rot | Innen gelb, außen rot | Innen orange, außen rot kräftiger |
| Ansatz 6.2; 1 Wärmebehandlung | hell - hellgrün | hell - hellgrün | Innen hellgelb, außen hellblau | Fast durchgängig hellblau | Durchgängig blau | Keine weitere Änderung |
| Ansatz 6.2; 2 Wärmebehandlungen | hell - hellgrün | hell - hellgrün | Innen hellgelb, außen hellblau | Fast durchgängig hellblau | Durchgängig blau | Keine weitere Änderung |
| Ansatz 6.3; 1 Wärmebehandlung | hell - hellgelb | hell - hellgelb | hellgelb | Innen hellgelb, außen grünblau | Innen etwas gelb, sonst hellblau | Durchgängig blau |
| Ansatz 6.3; 2 Wärmebehandlungen | hell - hellgelb | hell - hellgelb | hellgelb | Innen hellgelb, außen grünblau | hellblau | Durchgängig blau |
| Ansatz 7.1; 1 Wärmebehandlung | gelb - orange | Dunkel orange | Außen rot | Außen rot | Innen dunkelorange, außen rot | Innen dunkelorange, außen rot |
| Ansatz 7.1; 2 Wärmebehandlungen | gelb - orange | Dunkel orange | Außen rot | Außen rot | Innen dunkelorange, außen rot | Innen dunkelorange, außen rot |
| Ansatz 7.2; 1 Wärmebehandlung | hellgelb | hellgelb | Außen grün | Außen grün | hellgrün | grün - hellblau |
| Ansatz 7.2; 2 Wärmebehandlungen | hellgelb | hellgelb | Außen etwas grün | Außen etwas grün | hellgrün | hellgrün |
| Ansatz 7.3; 1 Wärmebehandlung | hellgelb | hellgelb | Außen etwas grünlich | Außen etwas grünlich | hellgrün | Grün - hellblau |
| Ansatz 7.3; 2 Wärmebehandlungen | hellgelb | hellgelb | Außen etwas grünlich | Außen etwas grün | hellgrün | hellgrün |

Auch nach einer zweiten Sterilisation färben sich nach einem Sauerstoffkontakt alle getesteten Sauerstoffindikatoren nach kurzer Zeit. Ein Recycling der erfindungsgemäßen Sauerstoffindikatoren ist demnach möglich.

## Patentansprüche

1. Verwendung von Resorufin als organischen Redoxfarbstoff, Glycerol und Wasser, eingearbeitet in Hydroxyethylstärke als Sauerstoffindikator.

2. Verwendung gemäß Anspruch 1 umfassend weiterhin einen organischen oder anorganischen Puffer.

3. Verwendung gemäß Anspruch 2 **dadurch gekennzeichnet, dass** der Puffer ein Phosphat- und/oder Citratpuffer ist.

4. Verwendung gemäß Anspruch 2 oder 3 **dadurch gekennzeichnet, dass** der Puffer ein Phosphat- und/oder Citratpuffer ist und in einer Konzentration von 0,001 bis 2 Mol, insbesondere 0,01 bis 1 Mol bezogen auf den Sauerstoffindikator enthalten ist.

5. Verwendung gemäß einem der Ansprüche 1 bis 4 **dadurch gekennzeichnet, dass** der pH-Wert in einem Bereich von 6 bis 10, insbesondere 7 bis 9, insbesondere 7,5 bis 8,5 liegt.

6. Verwendung gemäß einem der Ansprüche 1 bis 5 **dadurch gekennzeichnet, dass** als **weitere** Hilfsstoffe Methylcellulose, mikrokristalline Cellulose, Lysin, Lysin-Hydrochlorid, Magnesiumstearat und/oder Silicone, insbesondere Gelatine verwendet werden.

7. Verwendung gemäß einem der Ansprüche 1 bis 6 **dadurch gekennzeichnet, dass** er ein Trägermaterial umfasst, insbesondere Ionentauscher, Papier oder Folie.

8. Verwendung gemäß Anspruch 7 **dadurch gekennzeichnet, dass** der Ionentauscher ein Anionen- oder Kationentauscher auf Polymerbasis oder ein polymeres Kohlenhydratderivat umfasst.

9. Verwendung gemäß einem der Ansprüche 1 bis 8 in Form einer Tablette, Kapsel oder als Gel und/oder eingebracht in eine separate Umverpackung, bevorzugt einen Beutel oder Blister.

10. Verwendung gemäß einem der Ansprüche 1 bis 9 **dadurch gekennzeichnet, dass** der Redoxfarbstoff in der reduzierten Form enthalten ist.

11. Verwendung gemäß Anspruch 10 **dadurch gekennzeichnet, dass** der Redoxfarbstoff mit einem Reduktionsmittel mit einem höheren Reduktionspotential als der Farbstoff selbst, insbesondere Glucose, Natriumdisulfit, Zink, MnCl₂, N-Acetylcystein und/oder Ascorbinsäure, behandelt wird.

12. Verwendung gemäß einem der Ansprüche 1 bis 11 **dadurch gekennzeichnet, dass** die reduzierte Form des Redoxfarbstoffs Schutzgruppen aufweist, die sich bei Temperaturbehandlung abspalten.

13. Verwendung gemäß Anspruch 12 **dadurch gekennzeichnet, dass** die Schutzgruppe eine Benzoylgruppe enthält.

14. Verwendung gemäß einem der Ansprüche 1 bis 9 **dadurch gekennzeichnet, dass** der Redoxfarbstoff in seiner oxidierten Form enthalten ist und eine Reduktion während einer Temperaturbehandlung erfährt.

15. Verwendung gemäß einem der Ansprüche 1 bis 14 zur Überwachung von parenteralen und enteralen Applikationsformen.

16. Verwendung nach Anspruch 15 im räumlichen Bereich zwischen einem Beutel zur parenteralen und enteralen Ernährung und einem Umbeutel.

17. Verwendung gemäß Anspruch 15 oder 16 in Form von Tabletten, Kapseln oder aufgebracht auf Folie oder Papier oder in einem Beutel oder Blister.

## Claims

1. Use of resorufin as an organic redox dye, glycerol, and water, incorporated into hydroxyethyl starch as an oxygen indicator.

2. The use according to claim 1, further comprising an organic or inorganic buffer.

3. The use according to claim 2, **characterized in that** said buffer is a phosphate and/or citrate buffer.

4. The use according to claim 2 or 3, **characterized in that** said buffer is a phosphate and/or citrate buffer contained at a concentration of from 0.001 to 2 mol, especially from 0.01 to 1 mol, based on the oxygen indicator.

5. The use according to any of claims 1 to 4, **characterized in that** the pH is within a range of from 6 to 10, especially from 7 to 9, especially from 7.5 to 8.5.

6. The use according to any of claims 1 to 5, **characterized in that** methylcellulose, microcrystalline cellulose, lysine, lysine hydrochloride, magnesium stearate and/or silicones, especially gelatin, are employed as further auxiliary agents.

7. The use according to any of claims 1 to 6, **characterized by** comprising a support material, especially an ion exchanger, paper or sheet.

8. The use according to claim 7, **characterized in that** said ion exchanger comprises a polymer-based anion or cation exchanger or a polymeric carbohydrate derivative.

9. The use according to any of claims 1 to 8 in the form of a tablet, capsule or gel, and/or placed into a separate outer packaging, preferably a bag or blister pack.

10. The use according to any of claims 1 to 9, **characterized in that** said redox dye is contained in its reduced form.

11. The use according to claim 10, **characterized in that** said redox dye is treated with a reducing agent having a higher reduction potential than that of the dye itself, especially glucose, sodium disulfite, zinc, MnCl₂, N-acetylcysteine and/or ascorbic acid.

12. The use according to any of claims 1 to 11, **characterized in that** the reduced form of the redox dye has protecting groups that will cleave off during a temperature treatment.

13. The use according to claim 12, **characterized in that** said protecting group contains a benzoyl group.

14. The use according to any of claims 1 to 9, **characterized in that** said redox dye is contained in its oxidized form and is subjected to reduction during a temperature treatment.

15. The use according to any of claims 1 to 14 for monitoring parenteral and enteral application forms.

16. The use according to claim 15 in the space between a bag for parenteral and enteral nutrition and a surrounding bag.

17. The use according to claim 15 or 16 in the form of tablets, capsules, or applied to a sheet or paper, or in a bag or blister pack.

## Revendications

1. Utilisation de résorufine comme colorant redox organique, de glycérol et d'eau, incorporés dans de l'hydroxyéthylamidon, en tant qu'indicateur d'oxygène.

2. Utilisation selon la revendication 1, comprenant en outre un tampon organique ou inorganique.

3. Utilisation selon la revendication 2, **caractérisée en ce que** ledit tampon est un tampon phosphate et/ou citrate.

4. Utilisation selon la revendication 2 ou 3, **caractérisée en ce que** ledit tampon est un tampon phosphate et/ou citrate contenu à une concentration de 0,001 à 2 moles, notamment de 0,01 à 1 mole, par rapport à l'indicateur d'oxygène.

5. Utilisation selon l'une quelconque des revendications 1 à 4, **caractérisée en ce que** le pH est compris entre 6 et 10, notamment entre 7 et 9, notamment entre 7,5 et 8,5.

6. Utilisation selon l'une quelconque des revendications 1 à 5, **caractérisée en ce que** la méthylcellulose, la cellulose microcrystalline, la lysine, le chlorhydrate de lysine, le stéarate de magnésium et/ou des silicones, notamment la gélatine, sont utilisés comme autres auxiliaires.

7. Utilisation selon l'une quelconque des revendications 1 à 6, **caractérisée en ce qu'**il comporte un matériau support, notamment un échangeur d'ions, du papier ou une feuille.

8. Utilisation selon la revendication 7, **caractérisée en ce que** ledit échangeur d'ions comprend un échangeur d'anions ou de cations à base de polymère, ou un dérivé de glucide polymère.

9. Utilisation selon l'une quelconque des revendications 1 à 8 sous forme de comprimé, de capsule ou de gel, et/ou incorporés dans un suremballage séparé, de préférence dans un sac ou dans un blister.

10. Utilisation selon l'une quelconque des revendications 1 à 9, **caractérisée en ce que** ledit colorant redox est contenu sous forme réduite.

11. Utilisation selon la revendication 10, **caractérisée en ce que** ledit colorant redox est traité avec un réducteur ayant un potentiel de réduction plus élevé que celui du colorant lui-même, notamment du glucose, du disulfite de sodium, du zinc, du MnCl₂, de la N-acétylcystéine et/ou de l'acide ascorbique.

12. Utilisation selon l'une quelconque des revendications 1 à 11, **caractérisée en ce que** la forme réduite du colorant redox présente des groupes protecteurs qui se clivent lors d'un traitement thermique.

13. Utilisation selon la revendication 12, **caractérisée en ce que** ledit groupe protecteur contient un groupe benzoyle.

14. Utilisation selon l'une quelconque des revendications 1 à 9, **caractérisée en ce que** ledit colorant redox est contenu sous forme oxydée et subit une réduction pendant un traitement thermique.

15. Utilisation selon l'une quelconque des revendications 1 à 14 pour la surveillance de formes d'application parentérales et entérales.

16. Utilisation selon la revendication 15 dans l'espace entre une poche pour alimentation parentérale et entérale, et un sac extérieur.

17. Utilisation selon la revendication 15 ou 16 sous forme de comprimés, de capsules, ou appliqués sur une feuille ou sur un papier, ou dans un sac ou dans un blister.
